# EUROPEAN PATENT APPLICATION

(11) **EP 4 579 413 A1**
(43) Date of publication of application: **02.07.2025**
(21) Application number: 23870306.0
(22) Date of filing: 12.09.2023
(51) Int. Cl.: G06F 3/04817

(54) **APPLICATION ICON MANAGEMENT METHOD AND ELECTRONIC DEVICE**

(30) Priority: 30.09.2022 CN 202211215491
(71) Applicant: Huawei Technologies Co., Ltd., Shenzhen, Guangdong 518129 (CN)
(72) Inventor: FAN, Kai, Shenzhen, Guangdong 518129 (CN); LIU, Yongsheng, Shenzhen, Guangdong 518129 (CN); CAO, Xiongwei, Shenzhen, Guangdong 518129 (CN)
(74) Representative: Gill Jennings & Every LLP
(86) International application number: PCT/CN2023/118277
(87) International publication number: WO 2024/067068

(57) **Abstract**

This application discloses an application icon management method and an electronic device, and relates to the field of terminal technologies. The method includes: displaying a first interface on a display; displaying a second interface when detecting a first operation for a first application icon on the first interface, where a display parameter of the first application icon on the second interface is better than a display parameter of another application icon on the second interface; in response to a second operation for the first application icon on the second interface, controlling the first application icon to move on the second interface; and exchanging positions of the first application icon and a second application icon when the first application icon moves to a specified position of the second application icon on the second interface and a moving speed of the first application icon is lower than a preset moving speed threshold. In the solutions of this application, the first application icon is moved on a global interface, and a display parameter of a to-be-moved icon is changed, so that operation steps of a user are greatly simplified, and accuracy of searching for a target position is improved.

## Description

This application claims priority to Chinese Patent Application No. 202211215491.2, filed with the China National Intellectual Property Administration on September 30, 2022 and entitled "APPLICATION ICON MANAGEMENT METHOD AND ELECTRONIC DEVICE", which is incorporated herein by reference in its entirety.

### TECHNICAL FIELD

This application relates to the field of terminal technologies, and in particular, to an application icon management method and an electronic device.

### BACKGROUND

With the popularization of smart wearable devices, developers have developed various application programs (applications, APPs, application for short below) to enrich functions of the smart wearable devices, and a user may install many apps on the smart wearable devices. For the apps installed on the smart wearable device, icons corresponding to the apps may be displayed on one or more screens of the smart wearable device, where the one or more screens include a home screen (which may also be referred to as a desktop). Currently, most smart wearable devices support customization of a position of an app icon. To be specific, an app icon displayed on a screen of the smart wearable device is arranged by dragging the app icon to a specific position.

Due to a small screen of the smart wearable device, limited by a screen size, one screen of the smart wearable device may usually display only a preset quantity of app icons. When a quantity of apps installed on the smart wearable device is greater than the preset quantity, one screen usually cannot display all the app icons installed on the smart wearable device, and a plurality of screens are needed to display all the app icons. Therefore, if an app icon displayed on a home screen needs to be moved to a target position on another screen for display, the user needs to drag the app icon to scroll at an edge of the screen to find the target position. In this solution, although the app icon can be moved, a process of moving the app icon is complex, and human-machine interaction performance is poor.

### SUMMARY

This application provides an application icon management method and an electronic device, to resolve problems of complex operation and poor human-machine interaction experience during moving of an app icon.

The technical solutions are as follows.

According to a first aspect, an application icon management method is provided, applied to an electronic device with a display. The electronic device has N application icons, N is an integer greater than or equal to 2, and the method includes:
displaying a first interface on the display, where M application icons in the N application icons are displayed on the first interface, and M is a positive integer less than N;
detecting a first operation for a first application icon in the M application icons;
displaying a second interface on the display in response to the first operation, where the N application icons are displayed on the second interface, and a display parameter of the first application icon on the second interface is better than a display parameter of another application icon on the second interface;
detecting a second operation that is input on the second interface for the first application icon;
in response to the second operation, controlling the first application icon to move on the second interface; and
exchanging positions of the first application icon and a second application icon when an overlapping area between the first application icon and the second application icon is greater than or equal to a preset overlapping area threshold and a moving speed of the first application icon is lower than a preset moving speed threshold, where the second application icon is any application icon on the second interface.

The electronic device in this embodiment of this application is a smartwatch. After a user performs the first operation on the first application icon, a touchscreen of the smartwatch may enter the second interface from the first interface. The second interface is an interface that can display all icons. On the second interface, the first application icon is partially scaled up, which is more conducive to moving the first application icon to a target position and exchanging positions with the second application icon. In addition, in the solutions of this application, the target position can be further adjusted for a plurality of times, so that the user optimizes the icon more conveniently.

In a possible implementation of this application, in a case of the exchanging positions of the first application icon and a second application icon, the method further includes:
when detecting that the second operation continues to be performed on the first application icon, controlling the first application icon to continue moving to a position of a third application icon on the second interface; and
continuing to exchange positions of the first application icon and the third application icon when an overlapping area between the first application icon and the third application icon is greater than or equal to the preset overlapping area threshold and the moving speed of the first application icon is lower than the preset moving speed threshold.

In a possible implementation of this application, after the exchanging positions of the first application icon and a second application icon, the method further includes:
displaying a third interface on the display, where a plurality of application icons are displayed on the third interface, and the plurality of application icons include the first application icon; and
application icons closest to a center of the first application icon on the third interface are different from application icons closest to the center of the first application icon on the first interface in at least two application icons.

In a possible implementation of this application, after the exchanging positions of the first application icon and a second application icon, if it is detected that the second operation is canceled, third interface is displayed on the display immediately or after a preset time.

In a possible implementation of this application, in a process of controlling the first application icon to move on the second interface, a display parameter of at least one application icon is adjusted if it is detected that the first application icon overlaps with the second application icon and the moving speed of the first application icon is lower than the preset moving speed threshold, so that the display parameter of the at least one application icon is better than the display parameter of the another application icon on the second interface, where the at least one application icon includes the second application icon.

In a possible implementation of this application, the displaying a second interface on the display of the electronic device in response to the first operation includes:
displaying a fourth interface on the display in response to the first operation, where the fourth interface includes at least a first control; and
displaying the second interface on the display when detecting an operation for the first control.

In a possible implementation of this application, the exchanging positions of the first application icon and a second application icon when an overlapping area between the first application icon and the second application icon is greater than or equal to a preset overlapping area threshold and a moving speed of the first application icon is lower than a preset moving speed threshold includes:
exchanging the positions of the first application icon and the second application icon when a moving distance of the first application icon on the second interface is greater than or equal to a preset moving distance, the overlapping area between the first application icon and the second application icon is greater than or equal to the preset overlapping area threshold, and the moving speed of the first application icon is lower than the preset moving speed threshold.

**In** a possible implementation of this application, in a process of controlling the first application icon to move on the second interface, the second interface is displayed if it is detected that the second operation is canceled.

**In** a possible implementation of this application, the display parameter includes a display size and/or display brightness.

According to a second aspect, another application icon management method is provided, applied to an electronic device with a display. The electronic device has N application icons, N is an integer greater than or equal to 2, and the method includes:
displaying a first interface on the display, where M application icons are displayed on the first interface, the M application icons belong to the N application icons, and M is a positive integer less than N;
detecting a first operation for a first application icon in the M application icons;
displaying a fourth interface on the display in response to the first operation, where the fourth interface includes at least a second control; and
displaying a sixth interface on the display when detecting an operation for the second control on the fourth interface, where the first application icon and at least one target application icon are displayed on the sixth interface, and the target application icon is an application icon associated with the first application icon.

The electronic device in this embodiment of this application is a smartwatch. After a user performs the first operation on the first application icon, a touchscreen of the smartwatch may enter the fourth interface from the first interface. The fourth interface includes the second control. When the operation for the second control is detected, the sixth interface including the first application icon and the at least one target application icon is displayed. **In** this way, the user can gather associated application icons, which is more convenient for the user to use.

In a possible implementation of this application, before the displaying a sixth interface on the display when detecting an operation for the second control on the fourth interface, the method includes: displaying a fifth interface on the display, where at least one application icon in the N application icons is displayed on the fifth interface; detecting a selection operation that is input on the fifth interface for the at least one target application icon in the N application icons; and displaying the sixth interface in response to the selection operation.

In a possible implementation of this application, before the displaying the sixth interface, the method further includes: associating the at least one target application icon with the first application icon after detecting the selection operation for the at least one target application icon; and displaying the fourth interface, where the displaying the sixth interface correspondingly includes: displaying the sixth interface when detecting the operation for the second control on the fourth interface.

In a possible implementation of this application, the at least one target application icon on the sixth interface is distributed around the first application icon by using the first application icon as a center.

According to a third aspect, an electronic device is provided, including a processor. The processor is coupled to a memory, and the processor is configured to execute a computer program or instructions stored in the memory, so that the electronic device implements the application icon management method.

An electronic device includes a processor. The processor is coupled to a memory, and the processor is configured to execute a computer program or instructions stored in the memory, so that the electronic device implements the method for determining a head posture.

According to a fourth aspect, a computer-readable storage medium is provided. The computer-readable storage medium stores a computer program. When the computer program runs on an electronic device, the electronic device is enabled to perform the application icon management method.

It may be understood that, for beneficial effects of the third aspect and the fourth aspect, reference may be made to related descriptions in the first aspect or the second aspect. Details are not described herein.

### BRIEF DESCRIPTION OF DRAWINGS

FIG. 1 is a diagram of a smartwatch according to an embodiment of this application;
FIG. 2 is a diagram of a structure of an electronic device according to an embodiment of this application;
FIG. 3 is a block diagram of a software structure of an electronic device according to an embodiment of this application;
FIG. 4 is a diagram of desktop display of a smartwatch according to an embodiment of this application;
FIG. 5 is another diagram of desktop display of smartwatch according to an embodiment of this application;
FIG. 6 is a schematic flowchart of an application icon management method according to an embodiment of this application;
FIG. 7 is a diagram of switching an interface in an application icon management method according to an embodiment of this application;
FIG. 8 is a diagram of a position of an application icon according to an embodiment of this application;
FIG. 9 is a diagram of exchanging positions of application icons according to an embodiment of this application;
FIG. 10 is another diagram of exchanging positions of application icons according to an embodiment of this application;
FIG. 11 is a schematic flowchart of a method for gathering an associated application for an application icon according to an embodiment of this application;
FIG. 12A is a schematic flowchart in which an associated application is gathered on an interface according to an embodiment of this application;
FIG. 12B is another schematic flowchart in which an associated application is gathered on an interface according to an embodiment of this application;
FIG. 13 is a diagram of a prompt information interface according to an embodiment of this application;
FIG. 14 is a diagram of a rule for gathering an associated application according to an embodiment of this application;
FIG. 15 is a diagram of a crowd-out solution for gathering an associated application according to an embodiment of this application; and
FIG. 16 is a diagram of removing an associated application according to an embodiment of this application.

### DESCRIPTION OF EMBODIMENTS

To clearly describe the technical solutions in embodiments of this application, terms such as "first" and "second" are used in embodiments of this application to distinguish between same items or similar items that provide basically same functions or purposes. For example, a first application icon and a second application icon are merely used to distinguish between different application icons, and a sequence of the first application icon and the second application icon is not limited. A person skilled in the art may understand that the terms such as "first" and "second" do not limit a quantity or an execution sequence, and the terms such as "first" and "second" do not indicate a definite difference.

It should be noted that in this application, words such as "example" or "for example" are used to represent giving an example, an illustration, or a description. Any embodiment or design scheme described as an "example" or "for example" in this application should not be explained as being more preferred or having more advantages than another embodiment or design scheme. To be precise, use of the words such as "example" or "for example" is intended to present a relative concept in a specific manner.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

Embodiments of this application provide an application icon management method, an apparatus, and an electronic device. The application icon management method may be applied to an electronic device with a display, such as a smartwatch, a smart band, a mobile phone, a smart household, a vehicle-mounted device, or an augmented reality (augmented reality, AR)/virtual reality (virtual reality, VR) device. The electronic device has a plurality of apps. A name and a type of the electronic device are not limited in embodiments of this application. Neither a shape of the display nor a shape of an interface displayed on the display is limited in embodiments of this application. For example, the display and the interface displayed on the display each may be circular or rectangular.

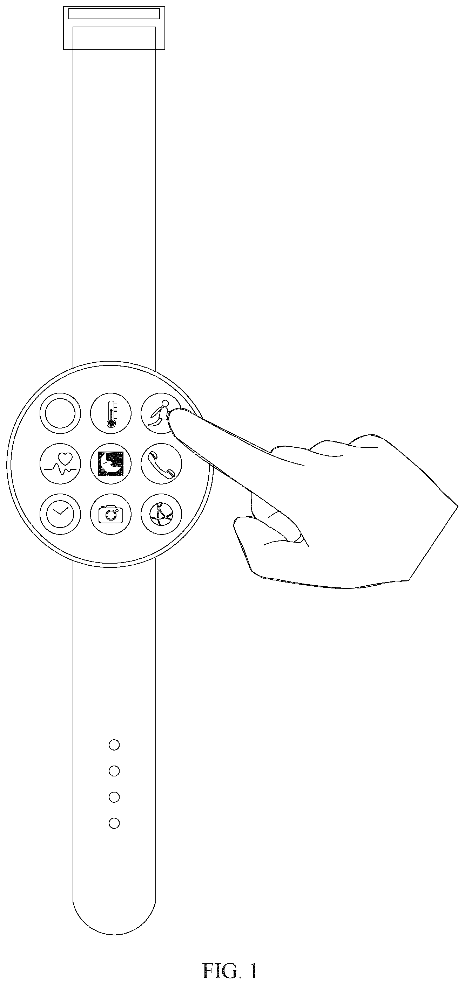

In an embodiment of this application, an example in which the electronic device is a smartwatch is used. As shown in FIG. 1, a touchscreen of the smartwatch is circular.

In this embodiment, a plurality of applications (applications, APPs) may be installed on the electronic device, and icons of these applications are displayed on a home screen (home screen) of the electronic device. The application in this embodiment of this application may be an embedded application (that is, a system application of an electronic device), or may be a downloadable application. The embedded application is an application provided as a part of implementation of the electronic device. The downloadable application is an application that may provide an Internet protocol multimedia subsystem (internet protocol multimedia subsystem, IMS) connection of the downloadable application. The downloadable application may be an application pre-installed on the electronic device, or may be a third-party application downloaded and installed by a user on the electronic device. In an example, the application may include a social application (for example, WeChat, QQ, or Facebook), an image management application (for example, an album), a map application (for example, Baidu Map or Google Map), a browser application, a music application (for example, QQ Music or NetEase Cloud Music), and the like.

A home screen of the electronic device may also be referred to as a desktop or a home screen. The home screen may include one or more sub-screens (sub-screens), and the one or more sub-screens may be configured to display a control (control element). The user may perform an operation of sliding left or right, to display different sub-screens through switching. The control is a graphical user interface (graphical user interface, GUI) element, and is a software component, which is included in an application and controls all data processed by the application and interaction operations related to the data. The user may interact with the control through direct manipulation (direct manipulation), to read or edit related information of the application. Generally, the control may include visual interface elements such as an icon (for example, an icon of an application in the electronic device or a folder icon), a button, a menu, a tab, a text box, a dialog box, a status bar, a navigation bar, and a widget.

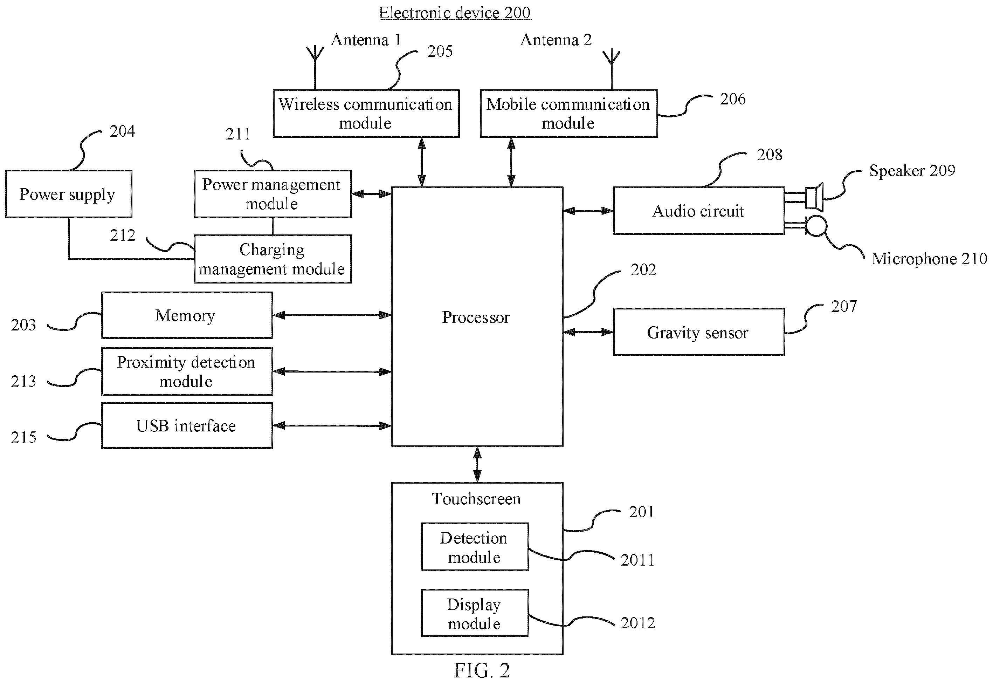

As shown in FIG. 2, an example in which an electronic device 200 is an electronic device on which a plurality of applications are installed is used. The electronic device 200 may include components such as a touchscreen 201, a processor 202, a memory 203, a power supply 204, a wireless communication module 205, a mobile communication module 206, a gravity sensor 207, an audio circuit 208, a speaker 209, a microphone 210, a power management module 211, and a charging management module 212. These components may be connected through a bus, or may be directly connected to each other.

In this embodiment of this application, the electronic device 200 may further include a proximity detection module 213. For example, the proximity detection module 213 is a "Hall device-magnet" device pair, a proximity sensor, or an NFC tag.

A person skilled in the art may understand that a structure of the electronic device shown in FIG. 2 does not constitute a limitation on the electronic device 200, and the electronic device 200 may include more components than those shown in the figure, or combine some components, or have a different component arrangement.

The proximity detection module 213 is configured to: when the electronic device 200 approaches a peripheral device, trigger both the electronic device 200 and the peripheral device to automatically enter a state in which a connection can be established by using a wireless communication protocol.

The touchscreen 201, also referred to as a touch and display panel, is configured to implement input and output functions of the electronic device 200, may collect a touch operation of a user on or near the touchscreen 201 (such as an operation of the user on or near the touchscreen 201 by using any suitable object or accessory, such as a finger or a stylus), and drive a corresponding connection apparatus according to a preset program. The touchscreen 201 may be further configured to display information entered by the user or information provided for the user (for example, an image collected by a camera, or displaying various application icons), and various menus of the electronic device 200. For example, the touchscreen 201 may be implemented in various types, such as a resistive type, a capacitive type, an infrared light sensing type, and an ultrasonic type. This is not limited in this embodiment of this application. An operation of the user near the touchscreen 201 may be referred to as a hover touch. A touchscreen on which the hover touch can be performed may be implemented by using a capacitive type, an infrared light sensing type, an ultrasonic wave, or the like.

For example, in this embodiment of this application, the touchscreen 201 may include a detection module 2011 and a display module 2012. The detection module 2011 may detect a touch operation performed by the user on the touchscreen 201, and may transfer, to the processor 202, a parameter generated by the touchscreen 201 after the touch operation is performed on the touchscreen 201 (for example, if the touchscreen 201 is implemented by using the capacitive type, the detection module 2011 may transfer a change parameter of the touchscreen 201 to the processor 202, where the change parameter is a magnitude, a shape, a quantity, and distribution of a capacitor whose capacitance value changes), so that the processor 202 performs corresponding processing based on the touch operation. The display module 2012 may display information entered by the user, information provided by the electronic device 200 for the user, various menus of the electronic device 200, and the like.

The processor 202 is a control center of the electronic device 200, is connected to all parts of the entire electronic device 200 by using various interfaces and lines, and performs various functions of the electronic device 200 and data processing by running or executing a software program and/or a module stored in the memory 203 and invoking data stored in the memory 203, to perform overall monitoring on the electronic device 200. During specific implementation, in an embodiment, the processor 202 may include one or more processing units, and an application processor and a modem processor may be integrated into the processor 202. The application processor mainly processes an operating system, a user interface, an application, and the like. The modem processor mainly processes wireless communication. It may be understood that the modem processor may not be integrated into the processor 202.

The memory 203 may be configured to store data, a software program, and a module; and may be a volatile memory (Volatile Memory) such as a random access memory (Random Access Memory, RAM), may be a non-volatile memory (Non-Volatile Memory) such as a read-only memory (Read-Only Memory, ROM), a flash memory (Flash Memory), a hard disk drive (Hard Disk Drive, HDD), or a solid-state drive (Solid-State Drive, SSD), or may be a combination of the foregoing types of memories. Specifically, the memory 203 may store program code. The program code may be executed by the processor 202 to perform the icon management method according to embodiments of this application.

Optionally, the electronic device 200 may further include an external memory interface. The external memory interface may be configured to connect to an external memory card, for example, a micro SD card, to extend a storage capability of the electronic device 200. The external memory card communicates with the processor 202 through the external memory interface, to implement a data storage function. For example, files such as music and a video are stored in the external storage card.

The power supply 204 may be a battery, and is logically connected to the processor 202 by using the power management module 211, to implement functions such as charging management, discharging management, and power consumption management by using the power management system.

The charging management module 212 is configured to receive a charging input from a charger. The charger may be a wireless charger or a wired charger. In some embodiments of wired charging, the charging management module 212 may receive a charging input of a wired charger through the USB interface 215. In some embodiments of wireless charging, the charging management module 212 may receive a wireless charging input through a wireless charging coil of the electronic device 200. When charging the battery, the charging management module 212 may further supply power to the electronic device 200 by using the power management module 211.

The power management module 211 is configured to connect to the battery, the charging management module 212, and the processor 202. The power management module 211 receives an input from the battery and/or the charging management module 212, and supplies power to the processor 202, the memory 203, the touchscreen 201, the wireless communication module 205, the mobile communication module 206, the gravity sensor 207, the audio circuit 208, the speaker 209, the microphone 210, and the like. The power management module 211 may be further configured to monitor a parameter such as a battery capacity, a battery cycle count, or a battery health status (electric leakage or impedance).

In some other embodiments, the power management module 211 may alternatively be disposed in the processor 202. In some other embodiments, the power management module 211 and the charging management module 212 may alternatively be disposed in a same device.

A wireless communication function of the electronic device 200 may be implemented through an antenna 2, the wireless communication module 205, the modem processor, the baseband processor, or the like.

Optionally, the wireless communication function of the electronic device 200 may alternatively be implemented through an antenna 1, the mobile communication module 206, or the like.

The antenna 1 and the antenna 2 are configured to transmit and receive an electromagnetic wave signal. Each antenna of the electronic device may be configured to cover one or more communication frequency bands. Different antennas may be further reused to improve antenna utilization. For example, the antenna 1 may be reused as a diversity antenna in a wireless local area network. In some other embodiments, the antenna may be used in combination with a tuning switch.

The wireless communication module 205 may provide a wireless communication solution that is applied to the electronic device 200 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 205 may be one or more components integrating at least one communication processing module. The wireless communication module 205 receives an electromagnetic wave through the antenna 2, performs frequency modulation and filtering processing on an electromagnetic wave signal, and sends a processed signal to the processor 202. The wireless communication module 205 may further receive a to-be-sent signal from the processor 202, perform frequency modulation and amplification on the signal, and convert the signal into an electromagnetic wave for radiation through the antenna 2. In this embodiment of this application, a source electronic device and a target electronic device may establish a communication connection by using respective wireless communication module 205.

The mobile communication module 206 may provide a wireless communication solution that includes 2G/3G/4G/5G or the like and that is applied to the electronic device 200. The mobile communication module 206 may include at least one filter, a switch, a power amplifier, a low noise amplifier (low noise amplifier, LNA), and the like. The mobile communication module 206 may receive an electromagnetic wave through the antenna 1, perform processing such as filtering or amplification on the received electromagnetic wave, and transmit a processed electromagnetic wave to the modem processor for demodulation. The mobile communication module 206 may further amplify a signal modulated by the modem processor, and convert an amplified signal into an electromagnetic wave for radiation through the antenna 1.

In some embodiments, at least some functional modules in the mobile communication module 206 may be disposed in the processor 202. In some embodiments, at least some functional modules in the mobile communication module 206 may be disposed in a same device as at least some modules of the processor 202.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device, or displays an image or a video through the touchscreen 201. In some embodiments, the modem processor may be an independent component. In some other embodiments, the modem processor may be independent of the processor 202, and is disposed in a same device as the mobile communication module 206 or another functional module.

In some embodiments, the antenna 1 of the electronic device 200 is coupled to the mobile communication module 206, and the antenna 2 is coupled to the wireless communication module 205, so that the electronic device 200 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The gravity sensor (Gravity Sensor) 207 may detect magnitudes of accelerations of the electronic device 200 in various directions (usually on three axes), and may detect a magnitude and a direction of gravity when the electronic device 200 is still. The gravity sensor 207 may be used for an application for recognizing a posture of the electronic device 200 (such as landscape/portrait switching, a related game, or magnetometer posture calibration), a vibration recognition-related function (such as a pedometer or knock recognition), and the like. It should be noted that, the electronic device 200 may further include another sensor, for example, a pressure sensor, an optical sensor, a gyroscope, a barometer, a hygrometer, a thermometer, an infrared sensor, and other sensors. Details are not described herein.

The audio circuit 208, the speaker 209, and the microphone 210 may provide an audio interface between the user and the electronic device 200. The audio circuit 208 may convert received audio data into an electrical signal and transmit the electrical signal to the speaker 209. The speaker 209 converts the electrical signal into a sound signal for output. In addition, the microphone 210 converts a collected sound signal into an electrical signal. The audio circuit 208 receives the electrical signal, converts the electrical signal into audio data, and then outputs the audio data to the wireless communication module 205 to send the audio data to, for example, another electronic device, or outputs the audio data to the processor 202 for further processing.

In addition, an operating system runs on the foregoing components. An application may be installed and run on the operating system.

In addition, although not shown herein, the electronic device 200 may further include components such as a Wi-Fi module, a Bluetooth module, and a camera.

The Wi-Fi module may be a module including a Wi-Fi chip and a driver of the Wi-Fi chip. The Wi-Fi chip has a capability of running a wireless Internet standard protocol. The Bluetooth module is a printed circuit board assembly (Printed Circuit Board Assembly, PCBA) into which a Bluetooth function is integrated, and is used for short-range wireless communication.

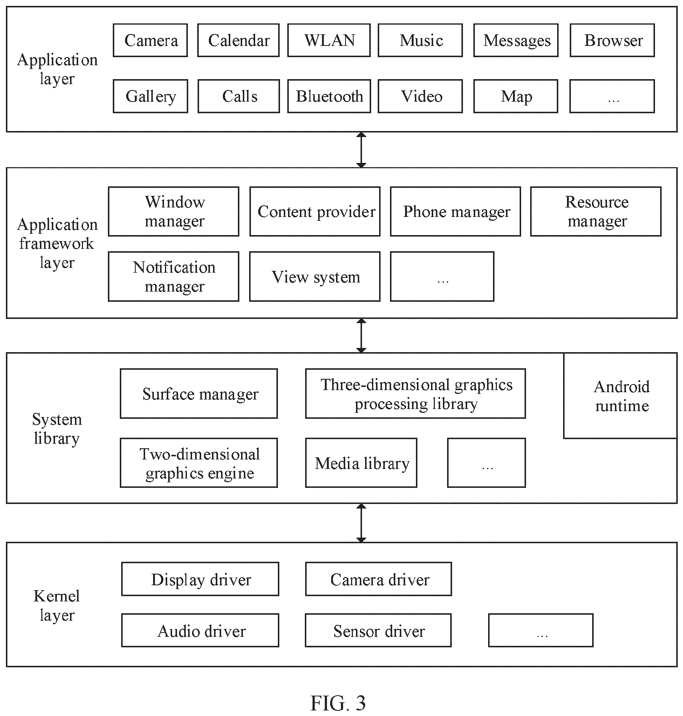

FIG. 3 is a block diagram of a software structure of an electronic device 200 according to an embodiment of this application. As shown in FIG. 3, the software structure of the electronic device 200 may be a layered architecture. For example, software may be divided into several layers, and each layer has a clear role and task. The layers communicate with each other through a software interface. In some embodiments, an Android system is divided into four layers: an application layer, an application framework (framework, FWK) layer, an Android runtime (Android runtime) and system library, and a kernel layer from top to bottom.

The application layer may include a series of application packages. As shown in FIG. 3, the application layer may include Camera, Calendar, WLAN, Music, Messages, Browser, Gallery, Calls, Bluetooth, Video, Map, and the like.

The application framework layer provides an application programming interface (application programming interface, API) and a programming framework for an application at the application layer. The application framework layer may include some predefined functions. As shown in FIG. 3, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like. The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the electronic device 200, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an alert tone is made, the electronic device vibrates, or an indicator blinks.

The Android runtime includes a core library and a virtual machine. The Android runtime is responsible for scheduling and management of the Android system.

The kernel library includes two parts: a performance function that needs to be called in Java language and a kernel library of Android. The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats such as MPEG-4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawing. The kernel layer is a layer between hardware and software. The kernel layer includes at least a display driver, a camera driver, an audio driver, and a sensor driver. The hardware layer may include various sensors.

Before embodiments of this application are described in detail, application scenarios of embodiments of this application are first described.

For ease of understanding, the following uses an example in which the electronic device 200 is a smartwatch. With reference to the accompanying drawings and an application scenario, an application icon management method according to this embodiment of this application is first described in detail.

In this embodiment of this application, a plurality of applications (APPs) are installed on the smartwatch, and the application may be a third-party application or a system application. This is not limited in this embodiment of this application. An icon distribution rule of an initial display interface of the smartwatch is 3 (rows) × 3 (columns). That is, a display interface of the smartwatch may display icons of a maximum of nine apps (app icons for short in this application). If there are more than nine apps of the smartwatch, and a user needs to search for an app other than the nine apps displayed on a display, the user needs to slide a screen to display the to-be-searched app icon on the display interface. For ease of understanding, an interface on which the smartwatch initially displays nine app icons is used as a home screen. An interface that is displayed by sliding the display and that displays an app icon other than the nine app icons that are on the home screen is used as another interface. Each interface displays nine app icons according to the rule of 3 (rows) × 3 (columns).

An app installed by the user is used as an example. After the app is installed, the electronic device 200 may display an icon of the app on the home screen of the smartwatch, or the electronic device 200 may display an icon of the app on any interface other than the home screen. However, usually, if a position of an app icon is not an expected position of the user, the user may move the app icon to the expected position. According to the technical solution provided in this application, a target position can be searched more conveniently to complete icon movement.

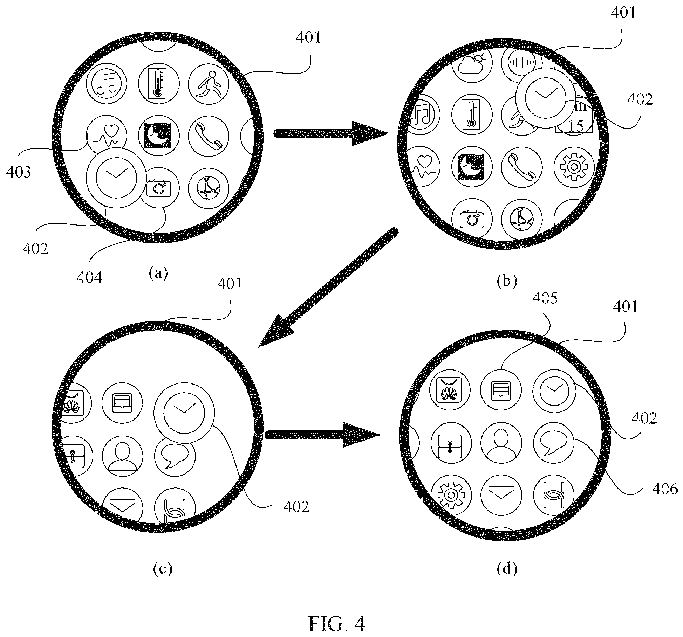

An example in which the electronic device 200 is a smartwatch is used. FIG. 4 is a diagram of desktop display of a smartwatch. For example, an icon distribution rule of a display interface of the smartwatch is 3 (rows) × 3 (columns), as shown in FIG. 4. If a quantity of applications (APPs) in the smartwatch is less than or equal to 9, all app icons may be displayed on one interface. However, when a quantity of apps installed on the smartwatch is greater than 9, or even if a quantity of apps installed on the smartwatch is less than 9, the smartwatch may display all app icons on a plurality of interfaces. For example, 36 apps are installed on the smartwatch, and the smartwatch displays these app icons on a plurality of interfaces. For example, an icon distribution rule of each interface is 3 (rows) × 3 (columns), and other app icons may be displayed on other interfaces by switching between the interfaces. When an app icon needs to be moved to a specific position, as shown in (a) in FIG. 4, the smartwatch detects an operation that is triggered by the user and that is of touching and holding an app icon 402 and dragging the app icon 402 to move. In response to the operation, as shown in (b) in FIG. 4, the smartwatch controls the app icon 402 to move. If the target position is not on a current interface, the user needs to drag the app icon 402 to an edge of a screen 401, to trigger the electronic device to perform page switching. After the user determines that the smartwatch moves the app icon 402 to the target position on a target interface shown in (c) in FIG. 4, the user may cancel an operation (for example, a hand raising operation) performed on the app icon 402. In response to the hand raising operation of the user, the smartwatch displays the app icon 402 at the target position on the target interface. It should be noted that, when there is no other app icon at the target position, the smartwatch may display the app icon 402 at the target position. When there is another app icon at the target position, the smartwatch controls the another app icon to be displayed at the another position, and then displays the app icon 402 at the target position.

The operation manner shown in FIG. 4 can implement position management of an app icon. However, in this manner, when a large quantity of app icons are displayed on a plurality of interfaces, the user needs to trigger interface switching, and the operation is complex.

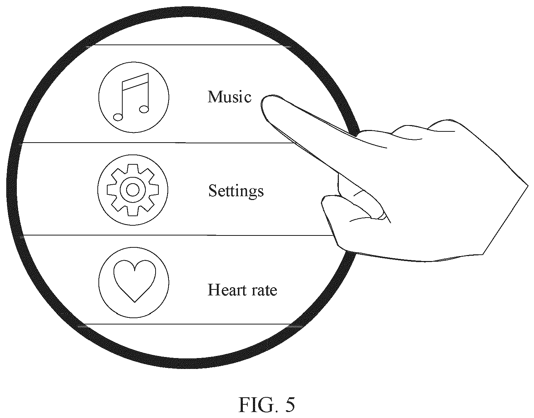

FIG. 5 is another diagram of desktop display of a smartwatch. App icons are displayed in a form of a list (multiple (rows) × 1 (column)). As shown in FIG. 5, when an app icon (for example, a "Music" icon) needs to be moved, a user touches and holds the "Music" icon. In response to the touch and hold operation of the user, the smartwatch moves the "Music" icon to a first position in an icon list on a current interface. However, the user needs to trigger the electronic device to scroll up and down the interface to search for a target position, and consequently, it is inconvenient to move the icon to the target position.

Based on the foregoing scenarios, an embodiment of this application provides an application icon management method, to resolve a problem that an operation of moving an app icon is complex, thereby improving human-machine interaction experience.

With reference to the application icon management method in this embodiment of this application, the following describes an example of operating procedures of software and hardware of the electronic device 200. In an example, after collecting sensor data, the sensor (for example, a touch sensor) at the hardware layer may send the sensor data to the system library through the kernel layer. The system library determines, based on the sensor data, an operation instruction currently received by the smartwatch. The view system converts the operation instruction into a movable image of an icon and displays the image on a desktop of the smartwatch.

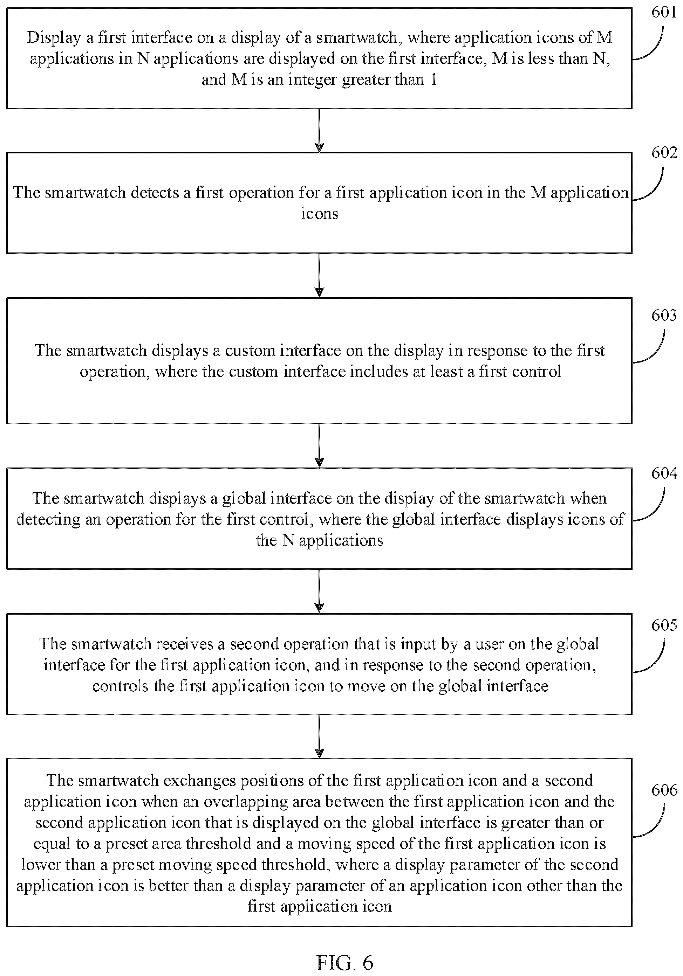

FIG. 6 is a schematic flowchart of an application icon management method according to an embodiment of this application. The method may be performed by a smartwatch. The smartwatch includes a display, and N applications (including a system application and/or a third-party application) are installed on the smartwatch, where N is an integer greater than or equal to 2. The method includes the following steps.

Step 601: Display a first interface on the display of the smartwatch, where application icons of M applications in the N applications are displayed on the first interface, M is less than N, and M is an integer greater than 1.

The first interface may be a home screen of the smartwatch, or may be any one of a plurality of interfaces of the smartwatch. This is not limited in this embodiment of this application.

It may be understood that, assuming that after a user wakes up the smartwatch, a first application icon that the user needs to move is not displayed on the home screen displayed by the smartwatch, the user may trigger a switching operation, to switch the smartwatch from the home screen to the first interface.

When the first interface of the smartwatch is the home screen, the first interface may be displayed by triggering a power-on button of the smartwatch or an operation of waking up the smartwatch, or may be displayed by waking up the display of the smartwatch by using another device connected to the smartwatch, such as a mobile phone. This is not limited herein.

It should be understood that M is less than or equal to a maximum quantity of app icons that can be displayed on the first interface. Optionally, M icons are distributed on the first interface according to a first icon arrangement rule. The maximum quantity of app icons that can be displayed on the first screen is determined by the first icon arrangement rule corresponding to the first interface. For example, when the first icon arrangement rule is 3 (rows) × 3 (columns), a maximum value of M is 9. Certainly, M may alternatively be a quantity less than 9, such as 7 or 6. This is not limited in this embodiment of this application. For example, when the first icon arrangement rule is 4 (rows) × 4 (columns), a maximum value of M is 16. When the first icon arrangement rule is 4 (rows) × 3 (columns), a maximum value of M is 12.

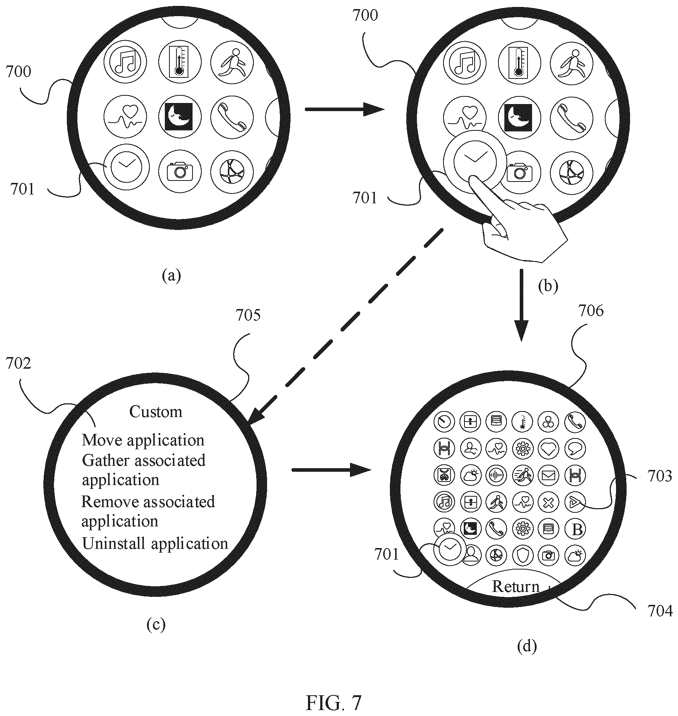

For example, in the following embodiment, N is equal to 36 and M is 9. If 36 apps corresponding to 36 app icons are installed on the smartwatch, and the first icon arrangement rule is 3 (rows) × 3 (columns), as shown in (a) in FIG. 7, a maximum of nine app icons are displayed on an interface 700 (corresponding to the first interface).

In an example, the smartwatch usually has the first icon arrangement rule. Generally, icon arrangement rules corresponding to the interfaces in the smartwatch are the same, for example, the icon arrangement rules are the first icon arrangement rule. The first icon arrangement rule may be a default icon arrangement rule of the smartwatch, or may be set by the smartwatch based on a trigger operation of the user. This is not limited in this embodiment of this application. Certainly, the icon arrangement rules corresponding to the interfaces in the smartwatch may alternatively be different. For example, the smartwatch has the home screen and the first interface, and an icon arrangement rule of the home screen is different from an icon arrangement rule of the first interface.

Step 602: The smartwatch detects a first operation for the first application icon in the M application icons.

In this embodiment of this application, the first operation is an operation that is triggered by the user and that is received by the smartwatch to select the first application icon. For an electronic device having a touch function, such as a smartwatch or a mobile phone, the first operation may be a tap operation, a touch and hold operation, a slide operation, or a double-tap operation. This is not limited in this embodiment of this application.

The following uses an example in which the first application icon is an app icon 701 and the first operation is a touch and hold operation. As shown in (a) in FIG. 7, to move the app icon 701 to a target position, as shown in (b) in FIG. 7, the user may input a touch and hold operation for the app icon 701 on the display of the smartwatch, to trigger the smartwatch to detect the touch and hold operation. In this way, the smartwatch may determine that an app icon selected by the user on the interface 700 (corresponding to the first interface) is the app icon 701.

It may be understood that when the user triggers the first operation, the smartwatch determines that the first application icon is selected. When the user cancels the first operation, that is, the smartwatch detects that the first operation disappears, the smartwatch may determine that the first application icon is deselected by the user.

When the user triggers the smartwatch to select the app icon 701, to help the user quickly determine whether the selected app icon is an app icon that the user needs to move, when the smartwatch detects the touch and hold operation for the app icon 701, as shown in (b) in FIG. 7, in response to the touch and hold operation, the smartwatch may control the app icon 701 to be scaled up for display and/or brightness of another app icon on the interface 700 on which the app icon 701 is located to be lower than display brightness of the app icon 701, to remind the user which app icon is selected. This avoids that, due to an accidental touch, a touch and hold operation that is for an icon and that is detected by the smartwatch is not the touch and hold operation performed by the user on the selected app icon. Certainly, the smartwatch may alternatively control the app icon 701 not to be scaled up for display. This is not limited herein.

In a possible implementation of this application, after receiving the touch and hold operation of the user, an input device (for example, the display) of the smartwatch sends the touch and hold operation to a processor of the smartwatch. The processor converts the touch and hold operation into an identifiable instruction, and sends the identifiable instruction to an operating system of the smartwatch. After receiving the instruction, the operating system determines that the operation of the user is a touch and hold operation, and instructs a display apparatus (the display) of the smartwatch to perform display corresponding to the instruction. The display of the smartwatch is both the input device and the display apparatus.

When the first operation triggered by the user is detected, it is needed to learn a real intention of the user, for example, whether to move the app icon 701. Therefore, optionally, in a possible implementation of this application, before the smartwatch displays a global interface on the display of the smartwatch in response to the first operation, the method according to this embodiment of this application further includes the following steps.

Step 603: The smartwatch displays a custom interface on the display in response to the first operation, where the custom interface includes at least a first control.

It should be noted that the custom interface is a fourth interface in this application.

Still with reference to FIG. 7, as shown in (b) in FIG. 7, after detecting the touch and hold operation for the app icon 701, the smartwatch displays an interface 705 (namely, the custom interface) shown in (c) in FIG. 7. The interface 705 includes a "Move application" control 702 (corresponding to the first control).

Optionally, the interface 705 may further include a close control or a return control. When the close control or the return control is triggered, the smartwatch closes the interface 705 to display the interface shown in (a) in FIG. 7.

Optionally, the custom interface may include one or more controls (for example, the first control), and each control corresponds to one selection window. When a selection window is selected, the smartwatch may determine that a control corresponding to the selection window is triggered.

Step 604: The smartwatch displays the global interface on the display of the smartwatch when detecting an operation for the first control, where the global interface displays icons of the N applications.

Optionally, the N application icons are distributed on the global interface according to a second icon arrangement rule. In an example, the second icon arrangement rule is different from the first icon arrangement rule. For example, the second icon arrangement rule may be 9 (rows) × 4 (columns) or 6 (rows) × 6 (columns).

It should be noted that the "global interface" may be a second interface in this application. The global interface is an interface that displays all app icons in the smartwatch.

The app icon displayed on the global interface is in a movable state. In addition, optionally, on the global interface, the user cannot trigger, by tapping an app icon, the smartwatch to run a corresponding app.

It should be noted that, in the embodiment shown in FIG. 6, for example, when detecting the first operation, in response to the first operation, the smartwatch first displays the custom interface and then displays the global interface. In an actual process, the smartwatch may directly display the global interface in response to the first operation, that is, skip a process of displaying the custom interface.

It should be noted that whether the smartwatch displays the custom interface after the user triggers the first operation may be a default process in the smartwatch, or may be set by the smartwatch based on an operation of the user. This is not limited in this embodiment of this application. For example, if the user triggers the smartwatch to set the custom interface not to be displayed during a process of exchanging positions of app icons, the smartwatch may directly display the global interface when the first operation is triggered.

Due to a limited size of the display of the smartwatch, when all the app icons of the smartwatch are displayed on the global interface, a display size of each app icon is less than a display size of the app icon when the app icon is not displayed on the global interface. To allow a user to view all the app icons of the smartwatch on the global interface and quickly and accurately find the selected app icon 701 from all the app icons, a display parameter of the app icon 701 on the global interface is better than a display parameter of another app icon on the global interface. The display parameter includes a display size of an icon and/or display brightness of the icon. Because the display parameter of the first application icon is better, it is convenient to determine the first application icon.

Still with reference to FIG. 7, after detecting that the "Move application" control 702 is triggered, the smartwatch displays an interface 706 (namely, the global interface) shown in (d) in FIG. 7. For example, the another app icon is an app icon 703. That the display parameter of the app icon 701 is better than a display parameter of the app icon 703 may be understood as follows: A display size of the app icon 701 is greater than a display size of the app icon 703, and/or display brightness of the app icon 701 is greater than display brightness of the app icon 703.

Optionally, display brightness of the app icon 701 on the global interface may be higher than display brightness of an app icon of another application on the global interface. For example, the display brightness of the app icon 701 remains unchanged or increases compared to display brightness of the app icon 701 on the first interface, while display brightness of another app icon decreases (for example, the another app icon is dimmed).

For example, as shown in (d) in FIG. 7, a display size of the app icon 701 on the global interface is scaled down by 0.8 times compared with a display size of the app icon 701 on the interface 700 shown in (a) in FIG. 7, and display sizes of the remaining icons are scaled down to 0.5 times original display sizes. A scale-down ratio may be adjusted based on a size of a display interface of an actual device and a quantity of applications installed on the device, or the scale-down ratio may be set by the user by triggering the smart device. This is not limited herein.

It may be understood that a display size of any app icon on the global interface is X times a display size of the app icon on another interface (for example, the first interface). X is less than 1. For example, X is 0.5 or 0.8.

In an example, the operating system of the smartwatch determines that the first operation is a touch and hold operation, and instructs the display of the smartwatch to display the global interface, to display app icons of 36 applications according to the second icon arrangement rule of 6 (rows) × 6 (columns). As shown in (d) in FIG. 7, that is, all the app icons on the smartwatch are displayed on the global interface.

It may be understood that when the user triggers the first operation, the smartwatch may generate, in the smartwatch, the global interface including all the app icons, and then display the global interface through the display. Alternatively, when the user triggers the first operation, the smartwatch may update the icon arrangement rule of the first interface from the first icon arrangement rule to the second icon arrangement rule, so that an updated first interface is considered as the global interface.

It should be noted that, because the display of the smartwatch is small, if a display size of the app icon is scaled down by an excessively small ratio, it is inconvenient for the user to perform an operation. Therefore, if a quantity of applications of the smartwatch exceeds a specific quantity, a plurality of global interfaces are used.

In an example, there are more than 36 applications. As shown in (d) in FIG. 7, there are 6 × 6 icons on the global interface, and another icon is displayed on another global interface. If the target position is not on a current global interface, the app icon 701 may be dragged to an edge of the display for page turning. A quantity of icons displayed on the global interface may be adjusted based on an actual device, and is not limited herein.

Step 605: The smartwatch receives a second operation that is input by the user on the global interface for the first application icon, and in response to the second operation, controls the first application icon to move on the global interface.

It may be understood that the second operation is an operation that is triggered by the user and that is of moving the first application icon, which is detected by the smartwatch. For example, the second operation may be a moving operation. It may be understood that the first operation and the second operation may be consecutive operations. For example, the first operation is triggered until the global interface is displayed, during which a finger of the user does not leave the display or remains within a preset distance from the display, so that the smartwatch perceives the first operation performed on the first application icon, and then the user triggers the second operation. In addition, the first operation and the second operation may be discontinuous operations. For example, after the first operation is triggered, a finger of the user leaves the display or a range between the finger and the display is greater than a preset distance, and then the smartwatch displays the global interface. When the global interface is displayed, the user triggers the second operation for the first application icon again.

It should be noted that, on the global interface, the global interface may further include a return control 704, as shown in (d) in FIG. 7. In this case, when detecting an operation for the return control 704, the smartwatch may display the first interface or the home screen. This is not limited in this embodiment of this application.

In another scenario of this application, it is assumed that the smartwatch enters the global interface after the user triggers the first application icon. In this case, if the user finds that the triggered first application icon is not an expected application icon of the user, and the user needs to select another application icon to move, the user triggers the smartwatch to return to the first interface from the global interface, reselects the to-be-moved application icon, and then triggers a touch and hold operation for the reselected to-be-moved application icon.

Optionally, when the global interface is displayed, if the smartwatch detects a moving operation triggered by the user for another app icon, the smartwatch uses the another app icon as the first app icon and performs step 604 and step 605. For example, at first, the smartwatch detects that an app icon selected by the user is the app icon 701, and triggers the smartwatch to enter the interface 706 shown in (d) in FIG. 7. However, in the interface 706, the user cancels an operation performed on the app icon 701, and performs the first operation on the app icon 703. Then, the user performs the second operation on the app icon 703. In this case, the smartwatch may determine that the user needs to exchange the app icon 703 and another icon.

During specific implementation of this application, after receiving the second operation, the display of the smartwatch sends the second operation to the processor of the smartwatch. The processor converts the second operation into an identifiable instruction, and sends the identifiable instruction to the operating system of the smartwatch. After receiving the instruction, the operating system determines that the second operation of the user is a moving operation, and instructs the display apparatus (the display) of the smartwatch to perform display corresponding to the instruction, that is, display a moving picture of the first application icon on the global interface.

Step 606: The smartwatch exchanges positions of the first application icon and a second application icon when an overlapping area between the first application icon and the second application icon that is displayed on the global interface is greater than or equal to a preset area threshold and a moving speed of the first application icon is lower than a preset moving speed threshold, where a display parameter of the second application icon is better than a display parameter of an application icon other than the first application icon.

In a possible implementation of this application, when the second operation is detected, the smartwatch determines the moving speed of the first application icon. The moving speed of the first application icon may be understood as a moving speed of a touch point between the user and the display of the smartwatch, for example, a touch point between a finger of the user and the display. When the moving speed is lower than or equal to the preset moving speed threshold, no more than P icons (including the second application icon) that are currently closest to a center of the first application icon are scaled up for display. In this way, it is convenient for the user to determine an icon in the P icons to be exchanged with the first application icon. For example, P is 4 or 6. In some other embodiments, it may be set that another quantity of icons near a position of the first application icon are scaled up for display. This is not limited in this application.

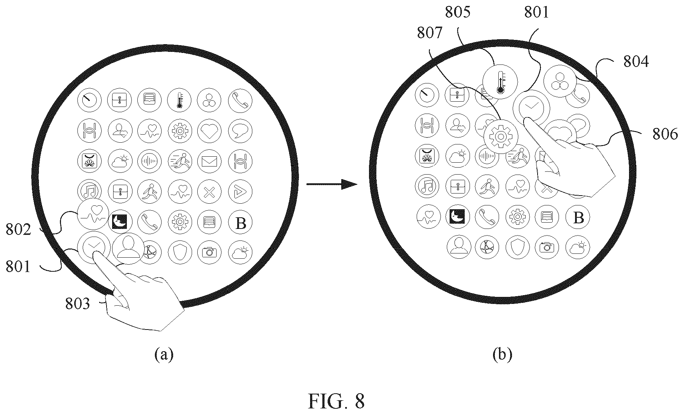

In an example, on the global interface, when the smartwatch detects the second operation for an app icon 801, and detects that a moving speed of the app icon 801 is lower than or equal to the preset moving speed threshold, as shown in (a) in FIG. 8, the smartwatch scales up app icons that are closest to a center of the app icon 801 for display, that is, an app icon 802 and an app icon 803.

Optionally, when the icons closest to the center of the app icon 801 are scaled up for display, display brightness of an icon other than the app icon 801 and the displayed scaled-up icon is reduced, and the icon is displayed in gray. The displayed scaled-up icon is in an exchangeable state, that is, the first application icon may exchange positions with the icon that is in the exchangeable state, and the icon whose display brightness is reduced is in a non-exchangeable state.

In a possible implementation of this application, the preset moving speed threshold is 50 pixels/second. When the smartwatch detects the second operation of touching and holding, and moving the app icon 801 on the global interface, the smartwatch detects the moving speed of the app icon 801. If the moving speed of the app icon 801 decreases to lower than 50 pixels/second, the smartwatch scales up y icons (for example, y=2 or 4) closest to the app icon 801 that are around the app icon 801 for display, to facilitate exchanging of icon positions. As shown in (b) in FIG. 8, y=4. Display sizes of the y icons are greater than a display size of an app icon other than the app icon 801 on the global interface. For example, a magnification multiple of the y app icons is 0.7 times a display size of an icon on the first interface, and display sizes of other app icons are 0.5 times the display size of the icon on the first interface. As shown in (b) in FIG. 8, the app icon 801 moves to a position shown in (b) in FIG. 8, and four icons around the app icon 801, that is, an app icon 804, an app icon 805, an app icon 806, and an app icon 807, are four icons closest to the app icon 801. The four app icons are scaled up for display.

In a process of moving an app icon, if a moving speed is higher than the preset moving speed threshold, the smartwatch may not scale up on a surrounding icon for display. The preset moving threshold of the moving speed may be adjusted based on an actual device. This is not limited herein.

Optionally, when detecting the second operation, the smartwatch determines a moving distance of the first application icon. Adding the determining of the moving distance can avoid that a surrounding app icon is scaled up at the beginning of moving the first application icon.

In an example, if the moving distance of the first application icon is greater than or equal to 1/20 of a pixel value of a screen diameter, and the moving speed is lower than or equal to the preset moving speed threshold (50 pixels/second), a plurality of app icons closest to the first application icon that are around the first application icon are scaled up for display, to facilitate exchanging of positions of app icons. The moving distance may be adjusted based on an actual device (for example, a size of a display of a smartwatch). This is not limited herein.

In an embodiment of this application, if the smartwatch detects that the second operation on the global interface is terminated, that is, the second operation of the user is canceled, for example, the user touches and holds the first application icon and moves the first application icon, and the user releases a finger in a moving process, it is considered that the second operation is terminated. In this case, the smartwatch restores the first application icon to a position before the first application icon is moved. Optionally, when the second operation of the user is canceled, the smartwatch displays the first interface, such as the interface shown in (a) in FIG. 7, in response to the second operation cancellation instruction.

In an embodiment of this application, an icon around the first application icon is highlighted, and the highlighted icon includes the second application icon. The smartwatch exchanges the position of the first application icon with a position of the second application icon when the smartwatch detects that the first application icon moves to a position that overlaps with the position of the second application icon, an overlapping area exceeds the preset area threshold, and a moving speed is lower than the preset moving speed threshold. When the overlapping area between the two icons does not exceed the preset area threshold, the smartwatch displays the first application icon gradually covering the second application icon. When the overlapping area between the icons exceeds the preset area threshold, the smartwatch displays the first application icon at the original position of the second application icon, and displays the second application icon at the original position of the first application icon.

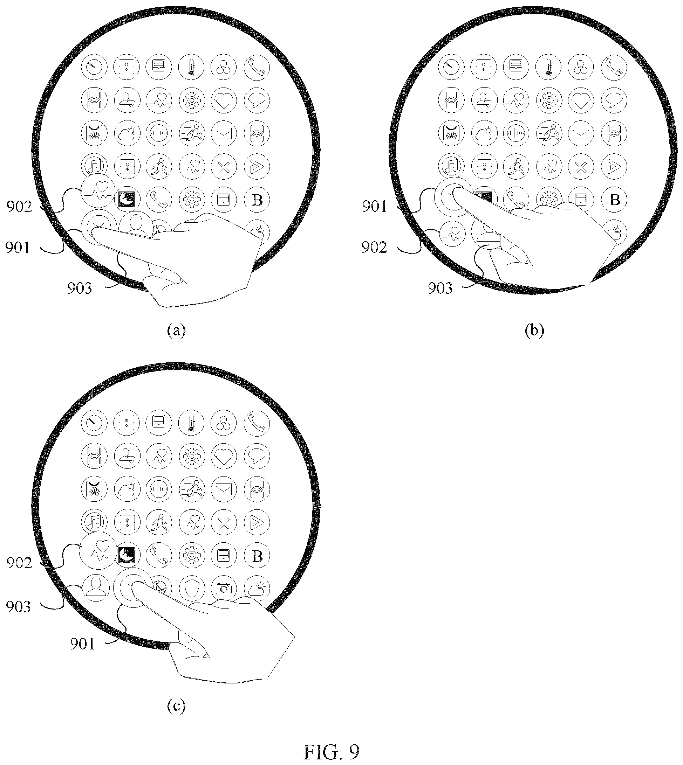

In an example, on the global interface, positions of the first application icon (an app icon 901) and the second application icon (an app icon 902) are shown in (a) in FIG. 9. The positions of the app icon 901 and the app icon 902 are exchanged when the smartwatch detects that the app icon 901 and the app icon 902 overlap, an overlapping area exceeds 80% of an area of the app icon 902, and a moving speed of the app icon 901 is lower than the preset moving speed threshold, as shown in (b) in FIG. 9.

In another example, the smartwatch may determine the overlapping area by detecting a distance between centers of the two app icons. For example, if the smartwatch detects that a distance between a center of the app icon 901 and a center of the app icon 902 is less than a preset threshold, it may be equivalent that the overlapping area of the two app icons is greater than the preset area threshold. This is not limited herein.

It should be noted that, as shown in (a) in FIG. 9, the smartwatch detects the first operation for the app icon 901, and enters the global interface. In this case, the smartwatch considers, by default, positions of two app icons around the app icon 901, that is, positions of the app icon 902 and an app icon 903, as possible target positions. Therefore, as shown in (a) in FIG. 9, the app icon 902 and the app icon 903 are scaled up for display, so that the app icon 901 exchanges positions with the app icon 902 or the app icon 903. After the positions of the app icon 901 and the app icon 902 are exchanged, the app icon 903 is still one of the target positions. Therefore, the app icon 903 is still highlighted, so that the user can exchange positions again.

In an example, the user may continue to drag the first application icon on an interface shown in (b) in FIG. 9. In this case, the smartwatch has exchanged the positions of the app icon 901 and the app icon 902. However, if the user wants to move the app icon 901 to a position of the app icon 903, the user may continue to trigger an operation of dragging the app icon 901 to move, and the smartwatch detects the operation (the second operation). When the app icon 901 moves above the app icon 903, and a moving speed of the app icon 901 is lower than or equal to the preset moving speed threshold, the smartwatch controls the app icon 901 to exchange positions with the app icon 903. Specifically, a change of an icon on a second interface is shown in (c) in FIG. 9. The app icon 902 that has previously exchanged positions with the app icon 901 returns to an original position and is scaled up for display. The app icon 903 moves to a position of the app icon 901 in (a) in FIG. 9.

In an embodiment of this application, after the positions of the first application icon and the second application icon are exchanged, the method according to this embodiment of this application may further include: The smartwatch displays a third interface on the display. A plurality of application icons displayed on the third interface include the first application icon. Application icons closest to a center of the first application icon on the third interface are different from application icons closest to the center of the first application icon on the first interface in at least two application icons. It may be understood that the third interface is an interface on which the second application icon is located before the icon position is exchanged. An application icon around the first application icon on the first interface is different from an application icon around the first application icon on the third interface. For example, (a) in FIG. 4 shows the first interface, an app icon 402 is the first application icon, and app icons closest to the app icon are an app icon 403 and an app icon 404. After positions are exchanged, the third interface is shown in (d) in FIG. 4, and app icons closest to the app icon 402 are an app icon 405 and an app icon 406. Optionally, the plurality application icons are arranged on the third interface according to a third icon arrangement rule. The third arrangement rule is the same as the first arrangement rule, or the third arrangement rule is different from the first arrangement rule. This is not limited herein.

In an example, after the user triggers the first application icon and the second application icon to exchange positions, the smartwatch automatically switches from the global interface to the third interface after preset duration (for example, 1 second). Alternatively, in another example, after the user triggers the first application icon and the second application icon to exchange positions, and the smartwatch detects a third operation performed on the global interface, the smartwatch automatically switches from the global interface to the third interface.

It may be understood that the third operation is an operation that is triggered by the user and that enables the smartwatch to perform interface switching.

After a position of the first application icon is exchanged with a position of the second application icon, the smartwatch may display the global interface. When the global interface is displayed, if the smartwatch detects an operation that is triggered by the user to exit the global interface, the smartwatch may display the third interface.

In an example, the third operation is an operation that a finger of the user leaves the display. After detecting the third operation (that is, the finger leaves the display), the smartwatch sends the third operation to the processor of the smartwatch. The processor converts the third operation into an identifiable instruction, and sends the identifiable instruction to the operating system of the smartwatch. After receiving the instruction, the operating system determines that the finger of the user leaves the display, and instructs the display apparatus (the display) of the smartwatch to perform display corresponding to the instruction, that is, display the third interface. In this case, the third interface displays an icon arrangement after the position of the first application icons is exchanged.

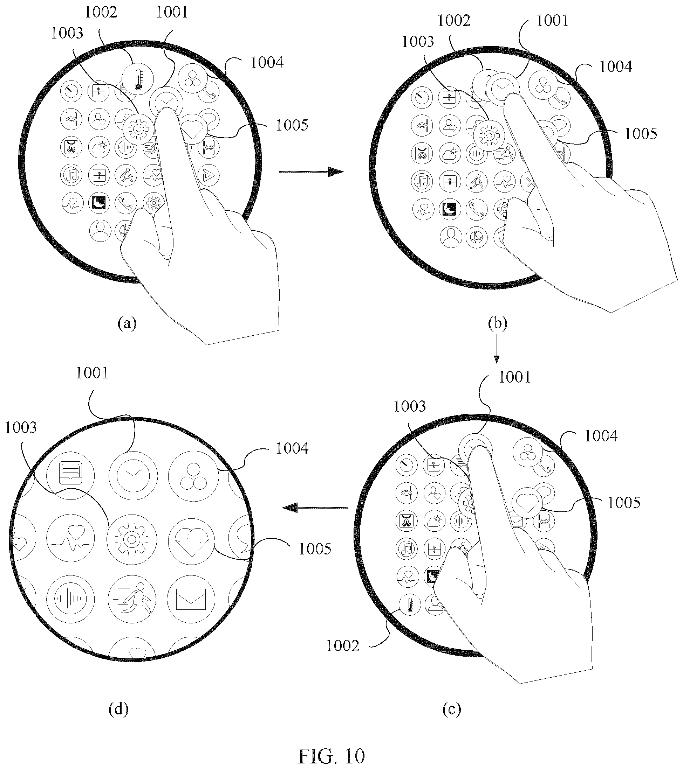

For example, as shown in (a) in FIG. 10, an example in which the first application icon is an app icon 1001 is used. First, the app icon 1001 is moved to a position shown in (a) in FIG. 10. Positions of four icons closest to the app icon 1001, that is, positions of an app icon 1002, an app icon 1003, an app icon 1004, and an app icon 1005, are all used as target positions for scaled-up display. As shown in (b) in FIG. 10, the smartwatch exchanges positions of the app icon 1002 and the app icon 1001 when the smartwatch detects that the app icon 1001 moves to overlap with the app icon 1002, an overlapping area is greater than the preset area threshold, and a moving speed of the app icon 1001 is lower than or equal to the preset moving speed threshold, as shown in (c) in FIG. 10. Then, the smartwatch detects the third operation, that is, the user releases the finger, and the display of the smartwatch displays an interface shown in (d) in FIG. 10, that is, the third interface.

It should be noted that, in a process of moving the first application icon on the global interface, an icon that the first application icon passes by remains unchanged and is not processed. If a moving distance is less than 1/20 of a pixel value of a screen diameter, and the moving speed is higher than 50 pixels/second, the processor does not process another icon.

During actual application, the user may arrange, according to an actual requirement of the user, icons of applications installed on the smartwatch. Because there are usually a large quantity of application icons on the desktop of the smartwatch, to reduce a search time of the user, some associated applications, for example, an alarm clock application, a stopwatch application, and a calendar application, or a sports and health application, a running application, and a music player application, may be arranged to adjacent positions. These associated applications have a similar function or a complementary function, or may be associated according to a preference of the user.

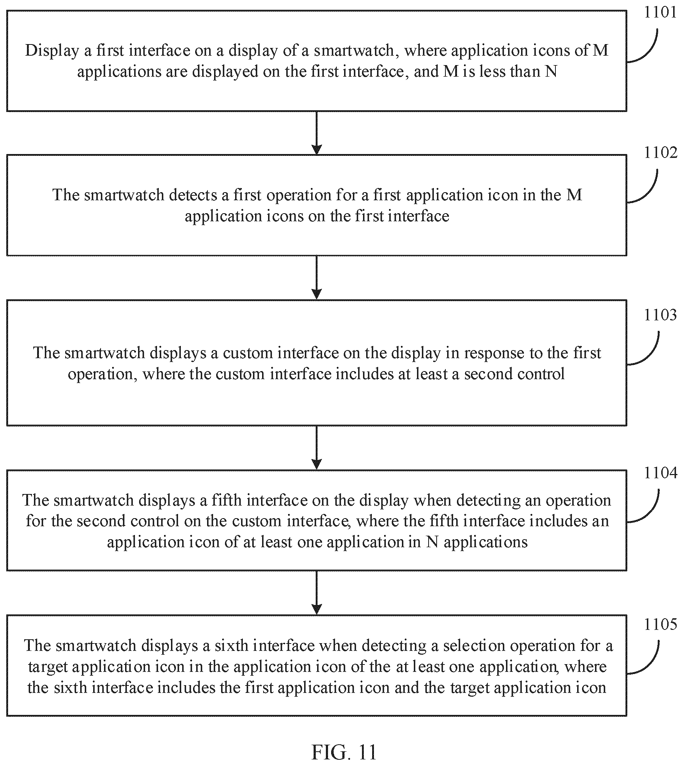

FIG. 11 is a schematic flowchart of another application icon management method according to an embodiment of this application. The method is performed by a smartwatch. The smartwatch includes a display, and N applications are installed. As shown in FIG. 11, the method includes the following steps.

Step 1101: Display a first interface on the display of the smartwatch.

Application icons of M applications are displayed on the first interface, and M is less than N.

Step 1102: The smartwatch detects a first operation for a first application icon in the M application icons on the first interface.

Step 1103: The smartwatch displays a custom interface on the display in response to the first operation. The custom interface includes at least a second control.

For specific implementation of step 1101 to step 1103, refer to the descriptions of step 601 to step 603 shown in FIG. 6. Details are not described herein.

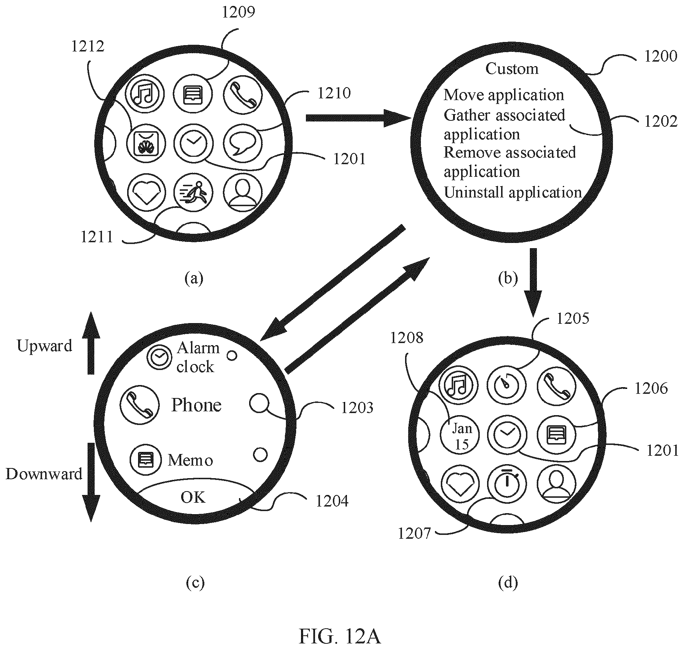

Step 1104: The smartwatch displays a fifth interface on the display when detecting an operation for the second control on the custom interface, as shown in (c) in FIG. 12A, where the fifth interface includes an application icon of at least one application in the N applications.

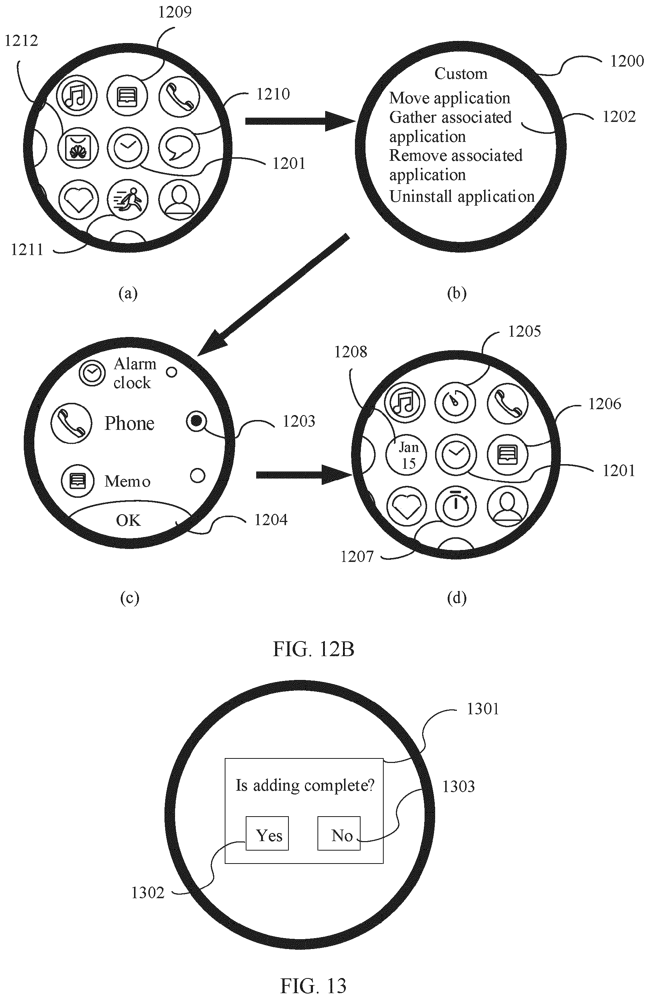

For example, the second control may be a "Gather associated application" control 1202 shown in FIG. 12A or FIG. 12B.

It should be noted that, when the smartwatch displays the fifth interface, a user may trigger the smartwatch to perform switching, so that an application icon displayed on the fifth interface changes. For example, in FIG. 12A or FIG. 12B, an example in which a distribution rule of app icons displayed on the fifth interface is z (rows) × 1 column is used. In this case, the user may perform an upward or downward sliding operation on the fifth interface to change the app icons displayed on the fifth interface. Certainly, the distribution rule of the app icons displayed on the fifth interface of the smartwatch may alternatively be a plurality of rows and a plurality of columns. In this case, each app may correspond to one selection control.

Step 1105: The smartwatch displays a sixth interface when detecting a selection operation for a target application icon in the application icon of the at least one application. The sixth interface includes the first application icon and the target application icon.

Optionally, the first application icon and the target application icon that are displayed on the sixth interface are distributed according to a preset rule.

For example, the selection operation may be an operation triggered by the user for a selection control corresponding to the target application icon. For example, if a selection control corresponding to an app icon is marked as a selected state, it may be considered that the user triggers the selection operation.

For example, as shown in FIG. 12A, the smartwatch displays an interface 1200 (corresponding to the custom interface) shown in (b) in FIG. 12Awhen detecting a touch and hold operation performed by the user on an app icon 1201 on an interface shown in (a) in FIG. 12A. The "Gather associated application" control 1202 is displayed on the interface 1200. When the smartwatch detects an operation for the "Gather associated application" control 1202, the smartwatch may determine that the user expects to gather and associate an app icon corresponding to the app icon 1201. Therefore, in response to the operation, the display of the smartwatch displays the fifth interface shown in (c) in FIG. 12A. The application icons on the fifth interface are displayed in a form of z rows × 1 column, each application icon may be displayed on the fifth interface in a scrolling manner, and each app icon corresponds to one "Selection" control 1203. When the fifth interface is displayed, the smartwatch determines an association relationship between another app icon and the app icon 1201. If an app icon displayed on the fifth interface is associated with the app icon 1201, a "Selection" control 1203 corresponding to the app icon is in the selected state. If an app icon displayed on the fifth interface is not associated with the app icon 1201, a "Selection" control 1203 corresponding to the app icon is in an unselected state. It should be noted that, because the application icons on the fifth interface are displayed in the form of z rows × 1 column, only some application icons can be displayed on the fifth interface at a time. Therefore, the user may trigger the smartwatch to perform interface switching to display another application icon. On the fifth interface, the user may trigger the smartwatch to perform page switching, to select at least one target application icon (for example, an app icon 1205, an app icon 1207, an app icon 1208, or an app icon 1206) associated with the app icon 1201. Optionally, the fifth interface includes an "OK" control 1204. As shown in (c) in FIG. 12A, after the smartwatch detects an operation for "Selection" controls corresponding to one or more target applications on the fifth interface, the smartwatch detects an operation for the "OK" control 1204, and in response to the operation, the smartwatch displays the custom interface shown in (b) inFIG. 12A.

If the smartwatch detects the operation performed by the user on the "OK" control displayed on the fifth interface, the smartwatch may display the interface 1200 shown in (b) in FIG. 12A. On the interface shown in (b) in FIG. 12A if the smartwatch detects an operation for the control 1202 again, the smartwatch displays the sixth interface shown in (d) in FIG. 12A. For example, the sixth interface displays the app icon 1201, the app icon 1205, the app icon 1206, the app icon 1207, and the app icon 1208. It may be understood that, in addition to the at least one app icon associated with the app icon 1201, the sixth interface may further display an app icon that is not associated with the app icon 1201.

For example, as shown in FIG. 12B, a difference between FIG. 12B and FIG. 12Alies in that: after the user triggers the smartwatch to display the interface shown in (c) in FIG. 12B, if the smartwatch detects the operation performed by the user on the "OK" control 1204 displayed on the fifth interface, the smartwatch displays the sixth interface shown in (d) in FIG. 12B. That is, in interfaces shown in FIG. 12B, the smartwatch does not need to perform a process of returning from the interface shown in (c) in FIG. 12B to the interface shown in (b) in FIG. 12B.

In a possible embodiment of this application, optionally, after the interface shown in (c) in FIG. 12A or (c) in FIG. 12B is displayed, if the smartwatch detects the operation for the "OK" control 1204, the smartwatch may enter an interface shown in FIG. 13, to prompt the user whether an associated application is added. As shown in FIG. 13, prompt information 1301 is displayed on the interface of the smartwatch. Optionally, the interface shown in FIG. 13 may further include a "Yes" control 1302 and an "No" control 1303. The smartwatch detects an operation for the "Yes" control 1302, and in response to the operation, displays the custom interface shown in (b) in FIG. 12A or the interface shown in (d) in FIG. 12B. If the user triggers the "No" control 1303, the smartwatch detects an operation for the "No" control 1303, and in response to the operation, continues to display the fifth interface shown in (c) in FIG. 12A. In an example, the prompt information 1301 may be displayed on the interface of the smartwatch in a form of a pop-up window or a card.

Optionally, on the interface shown in (c) in FIG. 12A or (c) in FIG. 12B, a return control is further displayed. When detecting that the return control is triggered, the smartwatch may display the interface 1200 shown in (b) in FIG. 12A or (b) in FIG. 12B.

It should be noted that, if one or more application icons in the N application icons have been associated with the first application icon, on the fifth interface, "Selection" controls 1203 corresponding to the one or more applications that have been associated with the first application are in the selected state. For example, an association relationship has been established between a phone application and an alarm clock application before the smartwatch detects, on the custom interface, that the "Gather associated application" control 1202 is triggered. On the fifth interface, a "Selection" control 1203 corresponding to an app icon of the phone application is shown in (c) in FIG. 12B.

Optionally, before the sixth interface is displayed, the smartwatch may establish an association relationship between the first application icon and the target application icon based on the selection operation that is detected by the smartwatch for the target application icon in the application icon of the at least one application.

The foregoing embodiment uses an example in which the fifth interface includes the "OK" control 1204. Certainly, after detecting the operation for the "Selection" controls corresponding to the one or more target applications on the fifth interface, the smartwatch enters the custom interface shown in (b) in FIG. 12A or the interface shown in FIG. 13 after preset duration (for example, 2 seconds). On the custom interface, the smartwatch detects the operation for the "Gather associated application" control 1202, and displays the sixth interface, for example, the interface shown in (d) in FIG. 12A or (d) in FIG. 12B.

In another possible embodiment of this application, for example, on the interface shown in (b) in FIG. 12A, if the smartwatch detects the operation for the "Gather associated application" control 1202, the smartwatch may first determine whether there is at least one target application icon associated with the app icon 1201. If the smartwatch determines that there is the at least one target application icon associated with the app icon 1201, the smartwatch may display the sixth interface shown in (d) in FIG. 12A after the interface shown in (b) in FIG. 12A is displayed. When the smartwatch detects the operation for the "Gather associated application" control 1202, if the smartwatch determines that there is no at least one target application icon associated with the app icon 1201, the smartwatch enters the interface shown in (c) in FIG. 12A after the interface shown in (b) in FIG. 12A is displayed.

The following uses an example in which the first application icon is the app icon 1201, and application icons associated with the app icon 1201 are the app icon 1205, the app icon 1206, the app icon 1207, and the app icon 1208, to describe a process of displaying the associated application icons on the sixth interface according to a gathering rule.

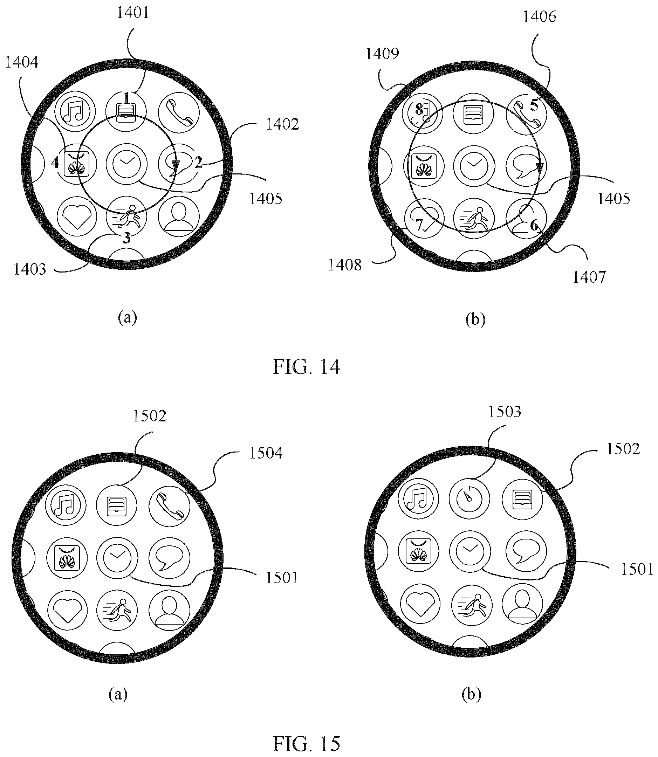

According to the gathering rule, a center of a selected icon is an origin, a distance from the selected icon to a nearest icon is a radius, and icons whose centers are within the radius range are sequentially arranged in a clockwise order of 1, 2, 3, and 4. As shown in (a) in FIG. 14, positions of an icon 1401, an icon 1402, an icon 1403, and an icon 1404 are positions at which icons of associated applications are distributed, and the icons of the to-be-gathered associated applications are sequentially arranged.

Optionally, if more than four associated applications are to be added, in an icon distribution rule for gathering associated applications, the associated applications start with a 5^{th} icon and are arranged in a clockwise order of 5, 6, 7, and 8 at a second layer around the first application icon. As shown in (b) in FIG. 14, positions of an icon 1406, an icon 1407, an icon 1408, and an icon 1409 are positions at which icons of the associated applications are arranged.

In an example, as shown in (a) in FIG. 12A, an app icon 1209, an app icon 1210, an app icon 1211, and an app icon 1212 are sequentially arranged at four nearest gathering positions of the app icon 1201. Associated applications selected by the user include a timer application (corresponding to the app icon 1205), a memo application (corresponding to the app icon 1206), a stopwatch application (corresponding to the app icon 1207), and a schedule application (corresponding to the app icon 1208). On the sixth interface displayed in the smartwatch, according to the gathering rule, the app icon 1205 moves to a position of the app icon 1209, the app icon 1206 moves to a position of the app icon 1210, the app icon 1207 moves to a position of the app icon 1211, and the app icon 1208 moves to a position of the app icon 1212, as shown in (d) inFIG. 12A.

It may be understood that the target application icon to be gathered around the first application icon and an application icon originally around the first application icon are displayed in a manner of exchanging positions.

Optionally, the target application icon to be gathered around the first application icon crowds out an application icon that is originally around the first application icon.

In an example, as shown in (a) in FIG. 15, the first application icon is an app icon 1501, and an app icon 1502 of a memo application is gathered around the app icon 1501. After gathering starts, an app icon of the target application, that is, an app icon 1503 of a to-be-gathered timer application that is selected by the user, crowds out a position of the app icon 1502, the app icon 1502 crowds out a position of an app icon 1504 to the right, and the app icon 1504 continues to crowd out a position to the right of the app icon 1504, and the rest may be deduced by analogy, until an original position of the app icon 1503 of the timer application is crowded out.

It may be understood that, when the first application icon is selected, if the smartwatch determines to establish an association for the first application icon, the smartwatch may further determine, based on an attribute of a first application to which the first application icon belongs, an application that belongs to a same attribute as the first application, so that the user subsequently establishes an association. For example, if the first application icon is a health application, the smartwatch may preferentially display app icons of a running application A and a running application B on the fifth interface. It may be understood that both the running application A and the running application B are applications installed on the smartwatch.

It should be noted that, the smartwatch marks app icons of applications that have an association relationship between them. After app icons of two applications that establish an association relationship with each other are gathered for display, the app icons respectively corresponding to the two applications occupy one gathering position of each other. When a gathering operation is performed on an app icon of any one application in the two applications again, gathering positions of the app icon of the any one application is reduced by one.

It should be noted that, for the smartwatch in the foregoing embodiment, an icon distribution rule displayed on the sixth interface is 3 × 3, with a maximum of 9 icons. Therefore, a quantity of added associated applications does not exceed 8.

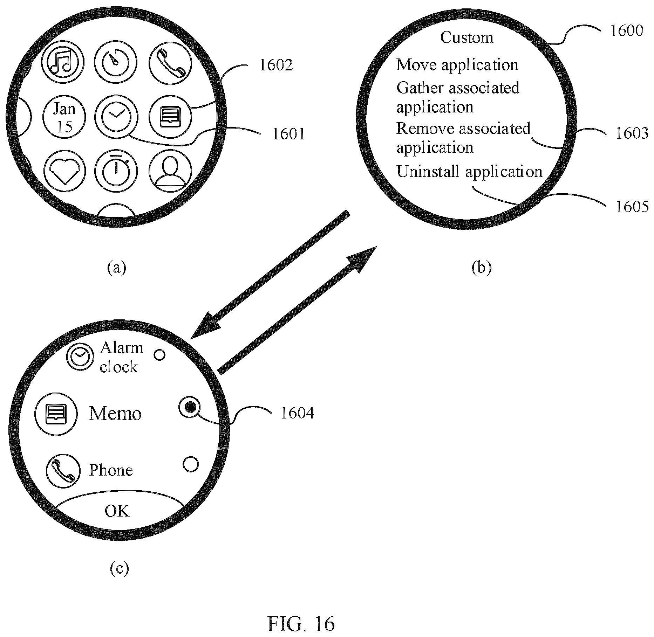

In a possible embodiment of this application, a custom interface 1600 further includes a "Remove associated application" control 1603, as shown in (b) in FIG. 16. For example, the first application icon is an app icon 1601, and an application icon associated with the app icon 1601 is an app icon 1602. As shown in (a) in FIG. 16, the smartwatch displays the custom interface 1600 when detecting a touch and hold operation performed by the user on the app icon 1601. The smartwatch displays a fifth interface when detecting an operation performed by the user on the "Remove associated application" control 1603. On the fifth interface, a "Selection" control 1604 corresponding to an app icon 1604 is in a selected state, as shown in (c) in FIG. 16. An association between the app icon 1602 and the app icon 1601 is removed by triggering the "Selection" control 1604 that is in the selected state. Optionally, in a possible implementation of this application, a plurality of associated app icons may be put into a same folder. When the user removes an association relationship between the plurality of associated app icons by performing the foregoing operation, the smartwatch may remove the plurality of associated app icons from the folder.

In a possible embodiment of this application, the custom interface 1600 further includes an "Uninstall application" control 1605, as shown in (b) in FIG. 16. The smartwatch displays the custom interface 1600 when detecting the touch and hold operation for the app icon 1601 on an interface shown in (a) in FIG. 16. On the custom interface 1600, the smartwatch uninstalls an application corresponding to the app icon 1601 when detecting an operation for the "Uninstall application" control 1605.

In the foregoing embodiments, the descriptions of each embodiment have respective focuses. For a part that is not described in detail or recorded in an embodiment, refer to related descriptions in other embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A skilled person may use different methods to implement the described functions for each particular application, but it should not be considered that the implementation goes beyond the scope of this application.

In embodiments provided in this application, it should be understood that the disclosed apparatus/computer device and method may be implemented in other manners. For example, the described apparatus/computer device embodiments are merely examples. For example, division into the modules or units is merely logical function division and may be other division during actual implementation. For example, a plurality of units or assemblies may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing embodiments are merely intended to describe the technical solutions of this application, but are not to limit this application. Although this application is described in detail with reference to the foregoing embodiments, a person of ordinary skill in the art should understand that the technical solutions described in the foregoing embodiments may still be modified or some technical features thereof may be equivalently replaced. These modifications and replacements shall fall within the protection scope of this application, and do not enable essence of a corresponding technical solution to depart from the spirit and scope of the technical solutions of embodiments of this application.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An application icon management method, applied to an electronic device with a display, wherein the electronic device has N application icons, N is an integer greater than or equal to 2, and the method comprises:
displaying a first interface on the display, wherein M application icons are displayed on the first interface, the M application icons belong to the N application icons, and M is a positive integer less than N;
detecting a first operation for a first application icon in the M application icons;
displaying a second interface on the display in response to the first operation, wherein the N application icons are displayed on the second interface, and a display parameter of the first application icon on the second interface is better than a display parameter of another application icon on the second interface;
detecting a second operation that is input on the second interface for the first application icon;
in response to the second operation, controlling the first application icon to move on the second interface; and
exchanging positions of the first application icon and a second application icon when the first application icon and the second application icon meet a preset condition, wherein the second application icon is any application icon on the second interface, and a display parameter of the second application icon is better than a display parameter of an application icon other than the first application icon on the second interface.

2. The method according to claim 1, wherein in a case of the exchanging positions of the first application icon and a second application icon, the method further comprises:
when detecting that the second operation continues to be performed on the first application icon, controlling the first application icon to continue moving to a position of a third application icon on the second interface; and
when the first application icon and the third application icon meet the preset condition, continuing to exchange positions of the first application icon and the third application icon.

3. The method according to claim 1 or 2, wherein the preset condition comprises:
an overlapping area between the first application icon and the second application icon or between the first application icon and the third application icon is greater than or equal to a preset overlapping area threshold, and a moving speed of the first application icon is lower than a preset moving speed threshold.

4. The method according to claim 1 or 2, wherein after the exchanging positions of the first application icon and a second application icon, the method further comprises:
displaying a third interface on the display, wherein M application icons are displayed on the third interface, and the M application icons comprise the first application icon; and
the application icons closest to a center of the first application icon on the third interface are different from the application icons closest to the center of the first application icon on the first interface in at least two application icons.

5. The method according to claim 3, wherein after the exchanging positions of the first application icon and a second application icon, if the second operation is not detected, the third interface is displayed on the display immediately or after a preset time.

6. The method according to any one of claims 1 to 5, wherein in a process of controlling the first application icon to move on the second interface, a display parameter of at least one application icon is adjusted if it is detected that the first application icon overlaps with the second application icon and the moving speed of the first application icon is lower than the preset moving speed threshold, so that the display parameter of the at least one application icon is better than the display parameter of the another application icon on the second interface, wherein the at least one application icon comprises the second application icon.

7. The method according to any one of claims 1 to 6, wherein the displaying a second interface on the display of the electronic device in response to the first operation comprises:
displaying a fourth interface on the display in response to the first operation, wherein the fourth interface comprises at least a first control; and
displaying the second interface on the display when detecting an operation for the first control.

8. The method according to any one of claims 1 to 7, wherein the exchanging positions of the first application icon and a second application icon when an overlapping area between the first application icon and the second application icon is greater than or equal to a preset overlapping area threshold and a moving speed of the first application icon is lower than a preset moving speed threshold comprises:
exchanging the positions of the first application icon and the second application icon when a moving distance of the first application icon on the second interface is greater than or equal to a preset moving distance, the overlapping area between the first application icon and the second application icon is greater than or equal to the preset overlapping area threshold, and the moving speed of the first application icon is lower than the preset moving speed threshold.

9. The method according to any one of claims 1 to 8, wherein in the process of controlling the first application icon to move on the second interface, the second interface is displayed if it is detected that the second operation is canceled.

10. The method according to any one of claims 1 to 9, wherein the display parameter comprises a display size and/or display brightness.

11. An application icon management method, applied to an electronic device with a display, wherein the electronic device has N application icons, N is an integer greater than or equal to 2, and the method comprises:
displaying a first interface on the display, wherein M application icons are displayed on the first interface, the M application icons belong to the N application icons, and M is a positive integer less than N;
detecting a first operation for a first application icon in the M application icons;
displaying a fourth interface on the display in response to the first operation, wherein the fourth interface comprises at least a second control; and
displaying a sixth interface on the display when detecting an operation for the second control on the fourth interface, wherein the first application icon and at least one target application icon are displayed on the sixth interface, and the target application icon is the application icon associated with the first application icon.

12. The method according to claim 11, wherein before the displaying a sixth interface on the display when detecting an operation for the second control on the fourth interface, the method comprises:
displaying a fifth interface on the display, wherein at least one application icon in the N application icons is displayed on the fifth interface;
detecting a selection operation that is input on the fifth interface for the at least one target application icon in the N application icons; and
displaying the sixth interface in response to the selection operation.

13. The method according to claim 11 or 12, wherein before the displaying the sixth interface, the method further comprises:
associating the at least one target application icon with the first application icon after detecting the selection operation for the at least one target application icon; and
displaying the fourth interface, wherein
the displaying the sixth interface correspondingly comprises:
displaying the sixth interface when detecting the operation for the second control on the fourth interface.

14. The method according to any one of claims 11 to 13, wherein the at least one target application icon on the sixth interface is distributed around the first application icon by using the first application icon as a center.

15. An electronic device, comprising a processor, wherein the processor is coupled to a memory, and the processor is configured to execute a computer program or instructions stored in the memory, so that the electronic device implements the method according to any one of claims 1 to 10 or any one of claims 11 to 14.

16. A computer-readable storage medium, wherein the computer-readable storage medium stores a computer program, and when the computer program runs on an electronic device, the electronic device is enabled to perform the method according to any one of claims 1 to 10 or any one of claims 11 to 14.
